# EUROPÄISCHE PATENTSCHRIFT

(11) **EP 0 937 560 B1**
(45) Veröffentlichungstag und Bekanntmachung des Hinweises auf die Patenterteilung: **09.04.2003**
(21) Anmeldenummer: 98810139.0
(22) Anmeldetag: 20.02.1998
(51) Int. Cl.: B29B 15/12

(54) **Herstellung von unidirektional faserverstärkten Thermoplasten**
Production of unidirectionally reinforced thermoplastics
Fabrication de produits thermoplastiques renforcés unidirectionnellement

(43) Veröffentlichungstag der Anmeldung: 25.08.1999
(73) Patentinhaber: Arova Schaffhausen AG, 8200 Schaffhausen (CH)
(72) Erfinder: Vodermayer, Albert, Dr., 8305 Dietlikon (CH); Kärger, Jens, Dr., 8405 Winterthur (CH); Kaufmann, Stefan, 5600 Lenzburg (CH); Erlach, Hans, 8405 Winterthur (CH)
(74) Vertreter: Sulzer Management AG

(56) Entgegenhaltungen:
- EP-A- 0 122 173
- EP-A- 0 637 502
- DE-A- 4 121 915
- GB-A- 2 086 444
- US-A- 4 728 387

## Beschreibung

Die Erfindung betrifft ein Verfahren zur Herstellung von unidirektional faserverstärkten Thermoplasten gemäss Oberbegriff von Anspruch 1.

Die DE-A 41 21 915 beschreibt ein Verfahren zum Imprägnieren eines endlosen Verstärkungsfaserstrangs in einem Bad, das eine Dispersion von Thermoplastpartikeln enthält. Um einen gleichbleibenden Thermoplastgehalt im erzeugten Band zu erhalten, wird nach Verlassen des Imprägnierbads am ablaufenden Strang die Breite gemessen, und die dabei gewonnenen Messwerte zur Regelung der Partikelkonzentration im Bad benutzt. Es wird vorgeschlagen, diese Regelung durch Zugabe von zwei oder mehr Dispersionen durchzuführen und dabei beispielsweise drei Dispersionen mit verschiedenen Konzentrationen zu verwenden, deren mittlere auf den Erwartungswert der Konzentration im ablaufenden Strang eingestellt ist. Die Zulaufmengen der Dispersionen können dabei durch eine Niveauregelung des Bades eingestellt werden.

In der GB-A- 2 086 444 werden Einrichtungen zum Herstellen von unidirektional faserverstärkten Thermoplasten beschrieben.

Aufgabe der Erfindung ist es, das bekannte Verfahren weiter zu vereinfachen. Diese Aufgabe wird durch das in Anspruch 1 definierte Verfahren gelöst. Die Vereinfachung beruht darauf, dass auf eine Regelung verzichtet werden kann. Es wird dabei von der neuen Erkenntnis ausgegangen, dass ein stationärer Betriebszustand gezielt einstellbar ist, nämlich aufgrund der Tatsache, dass bei einer konstanten Abzugsgeschwindigkeit und bei einer konstanten Zufuhr der Einspeisedispersion sich eine bestimmte Badkonzentration selbst einstellt. Mittels geeigneter Vorversuche können die richtigen Betriebsparameter bestimmt werden, um einen gewünschten Thermoplastanteil in dem herzustellenden Band zu erhalten.

Das Verfahren zur Herstellung von unidirektional faserverstärkten Thermoplastbändern umfasst ein Druckimprägnieren eines Faserstrangs in einem Bad mit einer Dispersion von Thermoplastpartikeln. An die Druckimprägnierung schliessen Wärmebehandlungen zum Trocknen des Strangs und Aufschmelzen der vom Strang aufgenommenen Partikel an. Der Strang wird mit einer vorgegebenen Abzugsgeschwindigkeit durch das Bad um eine Mehrzahl von Umlenkelementen gezogen. Die Dispersion des Bads wird weitgehend in einem stationären Zustand gehalten, nämlich durch Zuführen einer Einspeisedispersion mit einer ersten Partikelkonzentration und durch ein anfängliches Einstellen einer zweiten Partikelkonzentration im Bad: Die Einspeisedispersion wird kontinuierlich oder periodisch zugeführt, wobei die erste Partikelkonzentration konstant gehalten wird. Es ist auch ein entsprechendes Zuführen einer Dispersion höherer Partikelkonzentration sowie einer zusätzlichen Menge an Dispergiermittel möglich. Die zweite Partikelkonzentration wird auf einen Wert eingestellt, der allein aufgrund einer Selbsteinstellung konstant bleibt. Die beiden genannten Konzentrationen sind dabei in einer empirisch bestimmbaren Weise von einem zu erzielenden Thermoplastgehalt des Bands sowie von der Abzugsgeschwindigkeit abhängig.

Eine weitere neue Erkenntnis ist durch die Feststellung gegeben, dass es eine bestimmte Abzugsgeschwindigkeit gibt, bei der die Partikelkonzentration der Einspeisedispersion und jene des Bads gleich gross sind. Bei der Abzugsgeschwindigkeit, die dieser Gleichheit zugeordnet ist, lässt sich das erfindungsgemässe Verfahren (Gegenstand des Anspruchs 2) besonders einfach durchführen.

Die abhängigen Ansprüche 2 bis 9 beziehen sich auf vorteilhafte Ausführungsweisen des erfindungsgemässen Verfahrens.

In der genannten Offenlegungsschrift DE-A 41 21 915 sind Angaben über chemische und physikalische Eigenschaften der verwenbaren Thermoplaste, Verstärkungsfasern und Dispergiermittel gemacht. Diese als zutreffend angesehenen Angaben werden hier nicht wiederholt.

Nachfolgend wird die Erfindung anhand der Zeichnungen erläutert. Es zeigen:
- Fig. 1: eine Anlage, mit der das erfindungsgemässe Verfahren durchführbar ist,
- Fig.2a,b: Graphen zur Erläuterung der Selbsteinstellung der Badkonzentration,
- Fig. 3: einen Längsschnitt durch ein erstes Imprägnierbad und
- Fig. 4: einen entsprechenden Schnitt durch ein zweites Imprägnierbad.

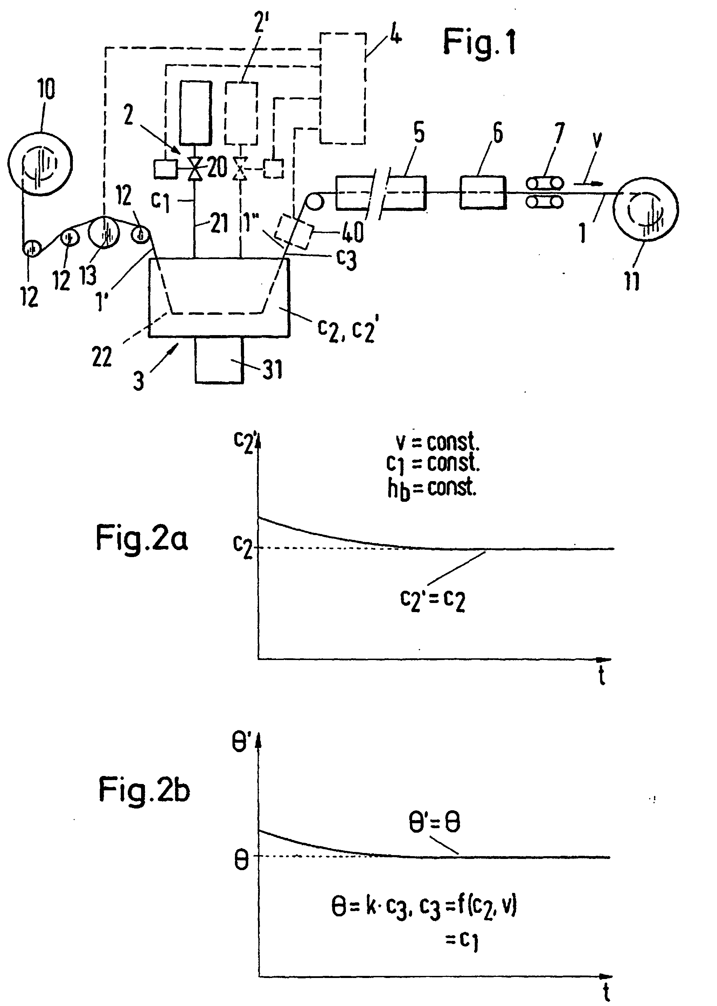

Die in Fig.1 schematisch dargestellte Anlage umfasst folgende Bestandteile: ein aus einem Faserstrang 1' hergestelltes Thermoplastband 1; eine Dosiereinrichtung 2 mit einem einstellbaren Ventil 20 zur Abgabe einer Einspeisedispersion 21 (Partikelkonzentration c₁) in ein Imprägnierbad 3, das eine Baddispersion 22 (Partikelkonzentration c₂) enthält; einen Trocknungsofen 5 für das imprägnierte Band 1"; einen Schmelzofen 6 zum Aufschmelzen der Partikel; eine Abzugseinrichtung 7, mit der das Band 1 mit einer Geschwindigkeit v abgezogen wird; ferner eine Aufwickelspule 11 sowie eine Vorratsspule 10, Umlenkstifte 12 und ein Mischorgan 31 zur Homogenisierung der Baddispersion 22. Gestrichelt dargestellt sind Komponenten, die gegenüber dem Stand der Technik (DE-A 41 21 915, siehe auch A.M. Vodermayer et al. Composites Manufacturing Vol. 4, p. 123, 1993) weggefallen sind: eine Regelungseinrichtung 4, eine Vorrichtung 40 zur optischen Breitenmessung des vorimprägnierten Strangs 1" und eine weitere Dosiereinrichtung 2' für eine Partikeldispersion. Ein Kraftaufnehmer 13 zur Messung der Vorspannkraft kann auch in der erfindungsgemässen Anlage vorhanden sein.

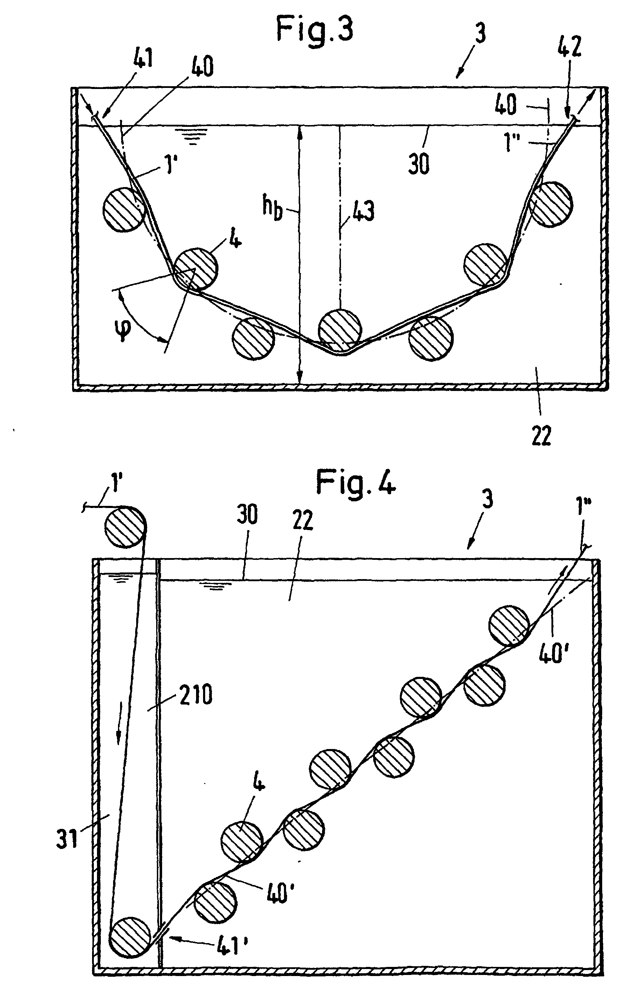

Der Faserstrang 1' wird mit der vorgegebenen Abzugsgeschwindigkeit v im Bad 3 durchgezogen und unter Einwirkung eines Werkzeugs mit Thermoplastpartikeln der Dispersion 22 imprägniert. Das Werkzeug umfasst eine Mehrzahl von Umlenkelementen 4 (vgl. Fig. 3), an denen jeweils im Bereich eines Umschlingungswinkels eine Druckimprägnierung stattfindet. Der Faserstrang 1' besteht aus mehreren übereinanderliegende Lagen von Fasern. An den Umlenkelementen erfahren die Fasern, die auf der Umlenkfläche aufliegen, in Strangrichtung eine geringere Spannung als weiter aussen liegende. Die aussen liegenden, strafferen Fasern werden zwischen die innen liegenden hineingezogen, wodurch sich eine Spreizung des Bandes quer zur Strangrichtung ergibt. Partikel, die an der Oberfläche des Strangs 1' zwischen dieser und der Umlenkfläche eingeschlossen sind, werden zwischen die weniger straffen Fasern gepresst, wodurch eine zusätzliche Spreizung des Bandes bewirkt wird. Nach dieser Aufnahmephase am Umlenkelement gelangt der Strang 1' wieder in die freie Dispersion, wo seine Oberflächen unter der Wirkung von Diffusion und Adsorptionskräften wieder mit Partikeln beladen wird. Am nachfolgenden Umlenkelement erfolgt ein Einpressen von Partikeln auf der andern Seite des Strangs 1'.

Die flüssige Phase der Baddispersion 22, das Dispergiermittel, ist z.B. Wasser oder ein Alkohol mit einer niedrigen Viskosität in der Grössenordnung von 0,01 Pa s. Eine niedrige Viskosität des Dispergiermittels ist bei dem Druckimprägnieren vorteilhaft, da diese Phase den in den Faserstrang 1' eindringenden Partikel wenig Widerstand entgegensetzt.

Im Strang 1' akkumulieren sich Partikel, so dass im vorimprägnierten Strang 1" nach dem Austritt aus dem Bad 3 eine Partikelkonzentration c₃ vorliegt, die in der Regel grösser als c₂ ist. Diese Konzentration c₃ ist von c₂ abhängig, aber auch von v: c₃ = f(c₂, v) .

Im Trocknungsofen 5 wird das Dispergiermittel aus dem vorimprägnierten Strang 1" durch Abdampfen entfernt. Die zurückbleibenden Partikel ergeben dabei einen Thermoplastgehalt θ des Bandes 1, der proportional zu c₃ ist: θ = k c₃. In einem stationären Zustand des Imprägnierverfahrens ist c₁ = c₃ und somit ist der Thermoplastgehalt θ (= k c₁) durch die Partikelkonzentration c₁ der Einspeisedispersion 21 festgelegt.

Erfindungsgemäss wird die Druckimprägnierung in einem stationären Zustand des Bads 3 durchgeführt, wobei c₂ so eingestellt wird, dass diese Konzentration von einem zu erzielenden Thermoplastgehalt θ im Band 1 sowie von der Abzugsgeschwindigkeit v in einer empirisch bestimmbaren Weise abhängt (θ = k f(c₂, v), siehe oben). Damit ein stationärer Zustand vorliegt, muss neben den Bedingungen v = const. und c₁ = const. auch die Bedingung gelten, dass das Niveau des Badspiegels, d.h. die Badhöhe h_{b}, konstant bleibt, was durch eine entsprechend dosierte Zuflussmenge der Einspeisedispersion erreicht wird.

Die Partikelkonzentration c₂ des Bads 3 muss zu Beginn des Verfahrens nicht exakt eingestellt werden, da sich der stationäre Wert anschliessend selbst einstellt. Allerdings ist bei einer solchen Abweichung eine entsprechende Abweichung des resultierenden Thermoplastgehalts θ am Anfang hinzunehmen, was aber in der Praxis normalerweise zu keinen Problemen führt. Die Selbsteinstellung der Badkonzentration und das entsprechende Verhalten des Thermoplastgehalts ist qualitativ anhand der Figuren 2a und 2b illustriert, in denen c₂' die zeitabhängige Badkonzentration bezeichnet und θ' den entsprechenden zeitabhängigen Thermoplastgehalt.

Um das Bad 3 in einem stationären Zustand halten zu können, muss die Zufuhr der Einspeisedispersion 21 kontinuierlich erfolgen. Es genügt aber in der Regel, wenn der stationäre Zustand nur angenähert vorliegt. Es ist daher auch ein periodisches Zuführen von jeweils gleich grossen Mengen der Einspeisedispersion 21 möglich.

Wie experimentell nachweisbar ist, gibt es für den stationären Zustand eine Abzugsgeschwindigkeit v, bei der c₁ und c₂ gleich gross sind. Da die Baddispersion 22 gelegentlich aus dem Bad 3 abgelassen werden muss, beispielsweise bei einem Wechsel der Vorratsspule 10, gestaltet sich das Verfahren einfacher, wenn für die beiden Dispersionen 21 und 22 gleiche Konzentrationen vorgesehen werden können.

Der erwähnte empirische Zusammenhang zwischen θ, v und c₂ ist möglicherweise nur näherungsweise bekannt. Aus diesem Grund kann es geschehen, dass das Volumen des Badinhalts nicht konstant bleibt. Mit Vorteil wird daher dieses Volumen überwacht, indem insbesondere die Höhe h_{b} (siehe Fig.3) des Badspiegels 30 gemessen wird. Für eine gegebenenfalls nötige Korrektur kann die Abzugsgeschwindigkeit v entsprechend geändert werden; und/oder der Anteil der flüssigen Phase der Einspeisedispersion 21, d.h. des Dispergiermittels, kann entsprechend geändert werden, wobei aber gleichzeitig die pro Zeiteinheit zugeführte Anzahl der Thermoplastpartikeln konstant gehalten werden muss.

Die Druckimprägnierung kann auf beiden Seiten des Faserstrangs weitgehend gleich intensiv ausgeführt werden, indem mit den Umlenkelementen auf beiden Seiten des Strangs Richtungswechsel bewirkt werden, die alternierend gerichtet und weitgehend gleich gross sind. Die Umlenkelemente haben mit Vorteil jeweils im Bereich des Umschlingungswinkels sowie in Bewegungsrichtung des Strangs einen weitgehend konstanten Krümmungsradius. Die Umlenkelemente sollen so angeordnet werden, dass die Summen der Umschlingungswinkel auf beiden Strangseiten jeweils weitgehend gleich gross sind.

Fig.3 zeigt ein Werkzeug mit Umlenkelementen 4, die entlang einem Kreisbogen 40 und in jeweils weitgehend gleich grossen Abständen der Umlenkflächen zum Kreisbogen 40 angeordnet sind. Da bei den Umlenkelementen 4, deren Mittelpunkte sich innerhalb des Kreisbogens befinden, die Umschlingungswinkel ϕ grösser als für die aussen liegenden sind, ist es vorteilhaft, wenn die Anzahl der äusseren Elemente 4 um eins grösser ist als die Anzahl der inneren. Die ungerade Anzahl Umlenkelemente 40 ist spiegelsymmetrisch um die senkrechte Mittellinie 41 angeordnet.

Statt eines Kreisbogens 40 kann auch eine Gerade 40' vorgesehen werden, wobei in diesem Fall mit Vorteil auf beiden Seiten der Gerade 40' gleich viele Umlenkelemente 4 angeordnet werden: siehe Fig.4. Während bei der Ausführungsform mit dem Kreisbogen 40 die Stelle 41 zum Zuführen des Strangs 1' in das Bad 3 sowie die Stelle 42 zum Wegführen des Strangs 1" aus dem Bad 3 über dem Badspiegel 30 angeordnet sind, ist dies bei der Ausführungsform mit entlang der Geraden angeordneten Umlenkelementen 4 nicht mehr möglich. Die Stelle 41' zum Zuführen des Strangs 1' in das Bad 3 befindet sich daher unterhalb des Badspiegels 30, wobei diese Zuführstelle 41' als Teil einer Schleuse 31 ausgebildet ist. In der Schleuse 31 ist Dispergiermittel 210 als Sperrmedium vorgesehen; mit diesem wird verhindert, dass Partikel aus der Baddispersion 22 in die Schleusenkammer 31 gelangen. Auch ein Gas, insbesondere Luft, kann in einer anders gestalteten Schleuse als Sperrmedium verwendet werden. Bei der Verwendung von Dispergiermittel 210 als Sperrmedium wird dieses über eine zusätzliche Zufuhrstelle (nicht gezeigt) in die Schleuse 31 eingespeist, wobei für einen kleinen Überdruck gegenüber der Baddispersion 22 gesorgt wird; die Einspeisedispersion 21 wird mit einer entsprechend höheren Partikelkonzentration der Baddispersion 22 zugeführt.

## Patentansprüche

1. Verfahren zur Herstellung von unidirektional faserverstärkten Thermoplastbändern (1), durch Druckimprägnieren eines Faserstrangs (1') mit einer Dispersion (22) von Thermoplastpartikeln in einem Bad (3) sowie durch anschliessende Wärmebehandlungen (5, 6) zum Trocknen des Strangs (1") und Aufschmelzen der vom Strang aufgenommenen Partikeln, wobei der Strang mit einer vorgegebenen Abzugsgeschwindigkeit v durch das Bad um eine Mehrzahl von Umlenkelementen (4) gezogen wird und die Dispersion (22) des Bads weitgehend in einem stationären Zustand gehalten wird,
**dadurch gekennzeichnet, dass** einerseits durch kontinuierliches oder periodisches Zuführen einer Einspeisedispersion (21), die eine konstant gehaltene erste Partikelkonzentration c₁ aufweist - oder durch entsprechendes Zuführen einer Dispersion höherer Partikelkonzentration sowie einer zusätzlichen Menge an Dispergiermittel (210) - und andererseits durch ein anfängliches Einstellen einer zweiten Partikelkonzentration c₂ im Bad auf einen Wert, der allein aufgrund einer Selbsteinstellung konstant bleibt, wobei die beiden genannten Konzentrationen c₁ und c₂ in einer empirisch bestimmbaren Weise von einem zu erzielenden Thermoplastgehalt θ des Bands (1) sowie von der Abzugsgeschwindigkeit v abhängen.

2. Verfahren nach Anspruch 1, **dadurch gekennzeichnet, dass** die Abzugsgeschwindigkeit v so vorgegeben wird, dass die beiden genannten Partikelkonzentrationen c₁ und c₂ zumindest angenähert gleich gross sind.

3. Verfahren nach Anspruch 1 oder 2, **dadurch gekennzeichnet, dass** ein konstant zu haltendes Volumen des Badinhalts überwacht wird, indem insbesondere die Höhe h_{b} des Badspiegels (30) gemessen wird, und dass für eine gegebenenfalls nötige Korrektur die Abzugsgeschwindigkeit v entsprechend geändert wird.

4. Verfahren nach einem der Ansprüche 1 bis 3, **dadurch gekennzeichnet, dass** ein konstant zu haltendes Volumen des Badinhalts überwacht wird, indem insbesondere die Höhe h_{b} des Badspiegels (30) gemessen wird, und dass für eine gegebenenfalls nötige Korrektur der Anteil der flüssigen Phase der Einspeisedispersion (21) entsprechend geändert wird, wobei gleichzeitig die pro Zeiteinheit zugeführte Menge an Thermoplastpartikeln konstant gehalten wird.

5. Verfahren nach einem der Ansprüche 1 bis 4, **dadurch gekennzeichnet, dass** die Druckimprägnierung auf beiden Seiten des Faserstrangs (1') weitgehend gleich intensiv ausgeführt wird, indem mit den Umlenkelementen (4) auf beiden Seiten des Strangs Richtungswechsel bewirkt werden, die alternierend gerichtet und weitgehend gleich gross sind.

6. Verfahren nach Anspruch 5, **dadurch gekennzeichnet, dass** die Umlenkelemente (4) jeweils im Bereich eines Umschlingungswinkels ϕ sowie in Bewegungsrichtung des Strangs (1') einen weitgehend konstanten Krümmungsradius aufweisen und die Summen der Umschlingungswinkel auf beiden Strangseiten jeweils weitgehend gleich gross sind, wobei insbesondere die Umlenkflächen der Umlenkelemente entlang einer Geraden (40') oder einem Kreisbogen (40) und in jeweils weitgehend gleich grossen Abständen von der Geraden bzw. dem Kreisbogen angeordnet sind.

7. Verfahren nach einem der Ansprüche 1 bis 6, **dadurch gekennzeichnet, dass** die flüssige Phase der Baddispersion (22) eine Viskosität in der Grössenordnung von 0,01 Pa s hat.

8. Verfahren nach Anspruch 6, **dadurch gekennzeichnet, dass** der Faserstrang (1') an Stellen (41, 42) in das Bad zugeführt bzw. weggeführt wird, die über dem Badspiegel (30) angeordnet sind, und dass die Umlenkflächen der Umlenkelemente entlang einem Kreisbogen (40) angeordnet sind.

9. Verfahren nach Anspruch 6, **dadurch gekennzeichnet, dass** der Faserstrang (1') an einer Zuführstelle (41') unterhalb des Badspiegels (30) in das Bad (3) zugeführt wird, wobei die Zuführstelle (41') als Teil einer Schleuse (31) ausgebildet ist, in der ein Gas oder Dispergiermittel (210) als Sperrmedium vorgesehen ist, und wobei die Berührungsflächen der Umlenkelemente entlang einer Geraden angeordnet sind.

## Claims

1. Method for the manufacture of unidirectionally fibre reinforced thermoplastic bands (1) through pressure impregnation of a fibre strand (1') with a dispersion (22) of thermoplastic particles in a bath (3) as well as through subsequent heat treatments (5, 6) for the drying of the strand (1") and the melting on of the particles taken up by the strand, with the strand being drawn through the bath at a predetermined draw-off speed (v) about a plurality of deflection elements (4) and the dispersion (22) of the bath is largely held in a stationary state,
**characterised in that**, on the one hand, through the continuous or periodic supply of an infeed dispersion (21) which has a particle concentration c₁ which is held constant ― or through a corresponding supply of a dispersion of higher particle concentration and an additional amount of dispersing medium (210) ― and, on the other hand, through an initial setting of a second particle concentration c₂ in the bath to a value which remains constant through its automatic self-setting alone, with the two named concentrations c₁, c₂ depending in an empirically determinable manner on a thermoplastic content θ of the band (1) to be achieved and on the draw-off speed v.

2. Method in accordance with claim 1, **characterised in that** the draw-off speed v is predetermined in such a manner that the two named particle concentrations c₁, c₂ are at least approximately equally large.

3. Method in accordance with claim 1 or claim 2 **characterised in that** a volume of the bath content which is to be held constant is monitored **in that**, in particular, the height h_{b} of the bath level (30) is measured; and **in that**, for a correction which is possibly necessary, the draw-off speed v is correspondingly changed.

4. Method in accordance with any one of the claims 1 to 3 **characterised in that** a volume of the bath content which is to be held constant is monitored **in that**, in particular, the height h_{b} of the bath level (30) is measured; and **in that**, for a correction which is possibly necessary, the proportion of the liquid phase of the infeed dispersion (21) is correspondingly changed, with the amount of thermoplastic particles being fed in per unit time being held constant at the same time.

5. Method in accordance with any one of the claims 1 to 4 **characterised in that** the pressure impregnation is carried out at both sides of the fibre strand (1') with largely equal intensity **in that** changes of direction which are alternatingly oriented and are largely of equal size are effected on both sides of the strand by means of the deflection elements (4).

6. Method in accordance with claim 5 **characterised in that** the deflection elements (4) in each case have a largely constant radius of curvature in the range of a wrapping angle ϕ and in the direction of movement of the strand (1'); and **in that** the sums of the wrapping angles on the two strand sides are in each case largely of equal size, with the deflection surfaces of the deflection elements in particular being arranged along a straight line (40') or a circular arc (40) and at distances from the straight line or the circular arc respectively which are in each case largely of equal size.

7. Method in accordance with one of the claims 1 to 6 **characterised in that** the liquid phase of the bath dispersion 22 has a viscosity on the order of magnitude of 0.01 Pa s.

8. Method in accordance with claim 6 **characterised in that** the fibre strand (1') is fed into or out of the bath at points (41, 42) which are arranged above the bath level (30); and **in that** the deflection surfaces of the deflection elements are arranged along a circular arc (40).

9. Method in accordance with claim 6 **characterised in that** the fibre strand (1') is fed into the bath (3) at an infeed point (41') below the bath level (30), with the infeed point (41') being formed as part of a lock (31) in which a gas or a dispersing medium (210) is provided as a blocking medium, and with the contact surfaces of the deflection elements being arranged along a straight line.

## Revendications

1. Procédé pour la production de rubans thermoplastiques unidirectionnels renforcés de fibres (1) par imprégnation sous pression d'un boyau de fibres (1') avec une dispersion (22) de particules thermoplastiques dans un bain (3) ainsi que par traitement thermique subséquent (5, 6) pour le séchage du boyau (1") et la fusion des particules absorbées par le boyau, où le boyau est tiré à travers le bain à une vitesse prédéterminée de passage v autour d'un certain nombre d'éléments de changement de direction (4) et la dispersion (22) du bain est largement maintenue à un état stationnaire,
**caractérisé en ce que**, d'une part, par l'amenée continue ou périodique d'une dispersion d'alimentation (21), qui présente une première concentration maintenue constante en particules c₁ - ou par l'amenée correspondante d'une dispersion à une plus haute concentration en particules ainsi qu'une quantité supplémentaire d'un agent de dispersion (210) - et, d'autre part, par un ajustement initial d'une seconde concentration en particules c₂ dans le bain à une valeur qui reste constante en raison d'un auto-ajustement, où lesdites concentrations c₁ et c₂ dépendent d'une manière pouvant être déterminée empiriquement d'une teneur θ en matière thermoplastique à obtenir dans le ruban (1) ainsi que de la vitesse de passage v.

2. Procédé selon la revendication 1, **caractérisé en ce que** la vitesse de passage v est prédéterminée de façon que lesdites deux concentrations en particules c₁ et c₂ soient au moins presque aussi grandes l'une que l'autre.

3. Procédé selon la revendication 1 ou 2, caractérisé en qu'une constante du volume à maintenir du contenu du bain est surveillée par le fait qu'en particulier, la hauteur h_{b} du niveau du bain (30) est mesurée et en ce que pour une correction éventuellement nécessaire, la vitesse de passage v est modifiée de manière correspondante.

4. Procédé selon l'une des revendications 1 à 3, **caractérisé en ce qu'**une constante du volume à maintenir du contenu du bain est surveillée par le fait qu'un particulier, la hauteur h_{b} du niveau du bain (30) est mesurée et **en ce que** pour une correction éventuellement nécessaire, la quantité de la phase liquide de la dispersion d'alimentation (21) est modifiée en correspondance, ce par quoi simultanément la quantité amenée par unité de temps de particules thermoplastiques est maintenue constante.

5. Procédé selon l'une quelconque des revendications 1 à 4, **caractérisé en ce que** l'imprégnation sous pression est exécutée de façon totalement aussi intensive sur les deux faces du boyau de fibres (1'), par le fait que des changements de direction sont effectués par les éléments de changement de direction (4) sur les deux faces du boyau, qui sont dirigés de façon alternée et sont de la même grandeur.

6. Procédé selon la revendication 5, **caractérisé en ce que** les éléments de changement de direction (4) présentent, dans la zone d'un angle de contact ϕ ainsi que dans la direction de mouvement du boyau (1'), un rayon de courbure largement constant et les sommes des angles de contact sur les deux côtés du boyau sont largement identiques, en particulier, les surfaces de changement de direction des éléments de changement de direction sont agencées le long d'une droite (40') ou d'un arc de cercle (40) et à des distances largement identiques de la ligne droite ou respectivement de l'arc de cercle.

7. Procédé selon l'une quelconque des revendications 1 à 6, **caractérisé en ce que** la phase liquide de la dispersion du bain (22) a une viscosité de l'ordre de grandeur de 0,01 Pa s.

8. Procédé selon la revendication 6, **caractérisé en ce que** le boyau de fibres (1') est introduit ou respectivement retiré du bain en des emplacements (41, 42) qui sont agencés au-dessus du niveau du bain (30) et **en ce que** les surfaces de changement de direction des éléments de changement de direction sont agencées le long d'un arc de cercle (40).

9. Procédé selon la revendication 6, **caractérisé en ce que** le boyau de fibres (1') est amené dans le bain (3) par un point d'amenée (41') en dessous du niveau du bain (30) et le point d'amenée (41') est configuré comme une partie d'un sas (31), dans lequel est prévu un gaz ou agent de dispersion (210) en tant que milieu de barrage et où les surfaces de contact des éléments de changement de direction sont agencées le long d'une droite.
